(19) Europäisches Patentamt
European Patent Office
Office européen des brevets

(11) **EP 2 096 414 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
**G01D 3/02** *(2006.01)* **G01D 5/244** *(2006.01)*

(21) Anmeldenummer: **08003472.1**

(22) Anmeldetag: **26.02.2008**

(54) **Verfahren und Vorrichtung zur Bestimmung der Drehstellung eines rotierenden Elements**

Method and device for determining the angle of a rotating object

Procédé et dispositif destinés à la détermination de la position de rotation d'un élément rotatif

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**02.09.2009 Patentblatt 2009/36**

(73) Patentinhaber: **Delphi Technologies, Inc.**
**Troy, MI 48007 (US)**

(72) Erfinder: **Heinrich, Markus, Stefan**
**51588 Nümbrecht (DE)**

(74) Vertreter: **Denton, Michael John**
**Delphi France SAS**
**64 avenue de la Plaine de France**
**ZAC Paris Nord II, BP 65059**
**Tremblay-en-France**
**95972 Roissy Charles de Gaulle (FR)**

(56) Entgegenhaltungen:
EP-A- 1 043 589 DE-A1- 10 028 035
DE-A1- 19 834 108 DE-A1-102005 023 880
DE-C1- 19 729 238

EP 2 096 414 B1

**Beschreibung**

Die Erfindung betrifft ein Verfahren zur Bestimmung der Drehstellung eines einem Elektromotor wie insbesondere einem kommutierten Gleichstrommotor zugeordneten oder von diesem angetriebenen rotierenden Elements, bei dem die im Ankerstrom des Elektromotors enthaltenen Stromrippel erfasst werden und die Anzahl von Umdrehungen des rotierenden Elements in Abhängigkeit von der Anzahl der Stromrippel bestimmt wird. Sie betrifft ferner eine Vorrichtung zur Bestimmung der Drehstellung eines einem Elektromotor wie insbesondere einem kommutierten Gleichstrommotor zugeordneten oder von diesem angetriebenen rotierenden Elements, mit Mitteln zur Erfassung der im Ankerstrom des Elektromotors enthaltenen Stromrippel und mit Mitteln zur Bestimmung der Anzahl von Umdrehungen des rotierenden Elements in Abhängigkeit von der Anzahl der Stromrippel.

Ein Verfahren sowie eine Vorrichtung dieser Art sind beispielsweise aus der WO 02/095924 A1 und der DE 197 29 238 C1 bekannt.

Das Ankerstromsignal eines kommutierten Gleichstrommotors umfasst neben einem Gleichanteil einen diesen überlagernden Wechselanteil, der sich durch das Zusammenwirken von Magnet bzw. Magnetfeld, Ankerwicklung und Kommutator ergibt. Dabei basiert die Welligkeit des Ankerstromsignals auf einer jeweiligen kurzzeitigen Änderung der induzierten Spannung. Da die in dem Ankerstromsignal enthaltenen Stromspitzen oder -rippe1 bei einer Umdrehung des Ankers in einer der Anzahl der Kollektorlamellen entsprechenden Häufigkeit auftreten, kann eine Zählung der Stromrippel Aufschluss über die aktuelle Drehstellung des Ankers bzw. bezüglich eines jeweiligen angetriebenen Elements geben. Dazu kann das analoge Ankerstromsignal digitalisiert werden, um eine entsprechende Zählung vornehmen zu können.

Im Betrieb des Gleichstrommotors kann es insbesondere unter Last vorkommen, dass die im Ankerstromsignal enthaltenen Stromrippel verzerrt auftreten, wobei sich eine solche Verzerrung insbesondere durch zwei Stromspitzen oder so genannte Doppelrippel bemerkbar macht. Eine Zählung solcher Doppelrippel kann nun aber zu einer fehlerhaften Positionsbestimmung des angetriebenen Elements führen. Entsprechendes gilt für das Ausbleiben eines Stromrippels, d.h. eines so genannten Fehlrippels, bei einer tatsächlichen Drehbewegung der Ankerwelle.

Die Messung der Motorposition kann mit oder auch ohne Sensor erfolgen. Dabei sind insbesondere die sensorlosen Messsysteme gegenüber entsprechenden Störungen anfällig.

Bei der aus der DE 197 29 238 C1 bekannten Vorrichtung zur Ermittlung der Drehzahl bei mechanisch kommutierten Gleichstrommotoren wird parallel zur Erfassung der Welligkeit des Motorstroms (Rippe1) mittels eines auf den elektromechanischen Motorgleichungen basierenden Motorzustandsmodells aus dem Motorstrom und der Motorspannung ein zulässiger Soll-Zeitbereich bestimmt, in dem eine Kommutierung erwartet wird. Bei der Auswertung der Welligkeiten werden die jeweiligen Zeitpunkte, zu denen diese auftreten, nur dann berücksichtigt, wenn diese im zulässigen Soll-Zeitbereich liegen. Kann innerhalb des zulässigen Soll-Zeitbereichs keine Welligkeit einer Kommutierung zugeordnet werden, wird ein wahrscheinlicher Kommutierungszeitpunkt für diesen Soll-Zeitbereich aus dem Motorzustandsmodell extrapoliert.

Auch bei einer aus der DE 10 2005 023 880 A1 bekannten Vorrichtung zur Ermittlung der Ist-Drehzahl eines Universalmotors wird die Drehzahl wieder aus dem zeitlichen Abstand der erfassten Stromrippel berechnet. Eine Kompensation von Messfehlern aufgrund von verzerrten Stromrippeln ist hier nicht vorgesehen.

In der DE 100 28 035 A1 ist ein Verfahren zur Bestimmung der Drehzahl eines Gleichstrommotors anhand erfasster Stromrippel beschrieben, bei dem zur Erhöhung der Genauigkeit der Positionserfassung beim Motoranlauf und Motorauslauf das Zeitintervall zwischen der Bestromung und der Erfassung des ersten Stromrippels und das Zeitintervall zwischen der Erfassung des letzten Stromrippels und dem Stillstand des Motorankers erfasst und die Stromrippelanteile der beiden Zeitintervalle anhand eines Vergleichs dieser Zeitintervalle mit der Periodendauer eines jeweiligen, der Motoranlauf- bzw. Motorauslaufphase zugeordneten detektieren Referenzstromrippels bestimmt werden. Dabei werden in dem Vergleich die relevanten Motorkenndaten als Konstante mit einbezogen.

Der Erfindung liegt die Aufgabe zugrunde, ein verbessertes Verfahren sowie eine verbesserte Vorrichtung der eingangs genannten Art zu schaffen, mit denen Messfehler auf einfache und zuverlässige Art und Weise erkannt und korrigiert werden können.

Bezüglich des Verfahrens wird diese Aufgabe erfindungsgemäß durch die Merkmale des Anspruchs 1 gelöst. Dabei werden zur Erfassung von Fehlern bei der Stromrippelerfassung fortlaufend die Zeitdauer zwischen jeweils zwei aufeinander folgenden erfassten Stromrippeln gemessen und über deren Kehrwert die Frequenz der erfassten Stromrippel bestimmt, um dadurch einen zeitlichen Frequenzverlauf zu erhalten. Bei einem jeweiligen Auftreten einer einen vorgebbaren Wert überschreitenden, d.h. unzulässigen Änderung des sich aus dem zeitlichen Frequenzverlauf ergebenden Frequenzsignals wird auf einen Fehler bei der Stromrippelerfassung geschlossen. Die Wellenform des Frequenzsignals im Bereich der erfassten unzulässigen Änderung wird anhand einer wahrscheinlichen Wellenform insbesondere anhand einer sich aufgrund der restlichen Messdaten ergebenden wahrscheinlichen Wellenform, korrigiert. Die Anzahl von Umdrehungen des rotierenden Elements wird über das korrigierte Frequenzsignal bestimmt.

Die Erfindung macht sich den Umstand zunutze, dass sich die Frequenz der Stromrippel aufgrund der Trägheit des rotierenden Systems nicht plötzlich ändern kann. Ein sich vom erwarteten Frequenzverlauf abweichender Frequenzverlauf wird demzufolge als Fehler interpretiert. Im Bereich des aufgetretenen Fehlers wird der Frequenzverlauf dann korrigiert, indem er an den erwarteten Frequenzverlauf angepasst wird. Indem die Anzahl von Umdrehungen des rotierenden Elements dann über das korrigierte Frequenzsignal bestimmt wird, können die betreffenden Fehler eliminiert werden.

Bevorzugt wird die Wellenform des Frequenzsignals aufgrund des bestimmten zeitlichen Frequenzverlaufs der korrekt erfassten Stromrippel und anhand einer sich aufgrund vorgebbarer Stützstellen, des Startzeitpunkts, des Abschaltzeitpunkts und des Stoppzeitpunkts des Elektromotors und/oder dergleichen ergebenden wahrscheinlichen Wellenform korrigiert. Dabei kann zur Erkennung der fehlerhaften Messpunkte insbesondere die weiter unten näher beschriebene Berechnungsmethode herangezogen werden.

Gemäß einer bevorzugten praktischen Ausgestaltung des erfindungsgemäßen Verfahrens wird die Anzahl von Umdrehungen des rotierenden Elements durch eine zeitliche Integration des korrigierten Frequenzsignals bestimmt.

Dabei kann die sich zwischen zwei erfassten Stromrippeln ergebende Drehstellung des rotierenden Elements insbesondere über das korrigierte Frequenzsignal bestimmt werden. Bevorzugt wird hierbei die sich zwischen zwei erfassten Stromrippeln ergebende Drehstellung des rotierenden Elements über eine zeitliche Integration des korrigierten Frequenzsignals bestimmt.

Die im Ankerstrom des Elektromotors enthaltenen Stromrippel können ohne Sensor direkt oder auch über wenigstens einen Sensor erfasst werden. Aufgrund der erfindungsgemäßen Fehlererfassung und Fehlerkorrektur ist insbesondere auch bei sensorlosen Systemen eine zuverlässige Messung möglich.

Zur Erfassung der unzulässigen Änderung wird vorzugsweise die Anzahl der Impulse über das Integral der Frequenzen berechnet. Das Ergebnis des Integrals zweier aufeinander folgender ermittelter Frequenzen muss 1 Impuls ergeben. Sollte das Ergebnis unzulässig abweichen, so wird die Messung als fehlerhafte Messung verworfen. Die tatsächliche Anzahl der Impulse kann dann im Nachhinein berechnet werden, sobald wieder korrekte Messdaten folgen. Die Berechnung kann wiederum mit Hilfe des Integrals der richtigen Frequenzen vor und nach Auftreten des Fehlers erfolgen.

Die Genauigkeit der Messung lässt sich weiter dadurch erhöhen, dass vorteilhafterweise der Wert der sich zwischen zwei korrekten Messungen durch eine Integration des Frequenzsignals ergebenden Anzahl von Stromrippeln gerundet wird.

Die Genauigkeit kann insbesondere auch dadurch verbessert werden, dass an den bekannten Stützstellen Start-, Ausschalt- und Stopp-Zeitpunkt die zugehörigen Frequenzen ergänzt werden und die Anzahl der Impulse beispielsweise wie angegeben berechnet wird. Zum Start- und zum Stopp-Zeitpunkt ist die Frequenz gleich Null. Da zum AusschaltZeitpunkt erfahrungsgemäß die größten Störungen und somit Messfehler zu erwarten sind und zudem nach dem Ausschalten die Drehzahl des Motors schnell abfällt, ist es erforderlich, den Abschalt-Zeitpunkt mathematisch zu berücksichtigen. Die angenommene Frequenz zum Abschaltzeitpunkt sollte die letzte richtig gemessene Frequenz vor dem Abschalten sein. Der Stopp-Zeitpunkt ist ebenfalls etwas schwieriger zu bestimmen. Zur Ermittlung dieses Stopp-Zeitpunkts sind beispielsweise die drei folgenden unterschiedlichen Möglichkeiten von Vorteil:

1. Wenn der Motorstrom gemessen wird, ist die Frequenz gleich Null, wenn der Strom einen zu ermittelnden Mindestwert erreicht hat.

2. Der Motor steht nach einer zu ermittelnden Zeit nach dem letzten gemessenen Impuls.

3. Die abfallende Gerade des Frequenzverlaufs wird mathematisch bis auf f=0 verlängert.

Da diese Ereignisse wahrscheinlich nicht zeitgleich mit einem Stromrippel stattfinden, wird das Ergebnis keine ganze Zahl sein und darf bei der Berechnung der Impulse vor und nach dem Ereignis nicht gerundet werden. Allerdings muss die Summe aus den Teilergebnissen vor und nach den Ereignissen zusammen wieder eine ganze Zahl ergeben und sollte deshalb dann auch wieder gerundet werden.

Bezüglich der Vorrichtung wird die zuvor angegebene Aufgabe erfindungsgemäß durch die Merkmale des Anspruchs 10 gelöst. Dabei sind Mittel zur Erfassung von Fehlern bei der Stromrippelerfassung vorgesehen, durch die fortlaufend die Zeitdauer zwischen jeweils zwei aufeinander folgenden erfassten Stromrippeln gemessen wird, um über deren Kehrwert die Frequenz der erfassten Stromrippel zu bestimmen und dadurch einen zeitlichen Frequenzverlauf zu erhalten. Die Fehlererfassungsmittel sind so ausgeführt, dass bei einem jeweiligen Auftreten einer einen vorgebbaren Wert überschreitenden, d.h. unzulässigen Änderung des sich aus dem zeitlichen Frequenzverlauf ergebenden Frequenzsignals auf einen Fehler bei der Stromrippelerfassung geschlossen wird. Es sind Korrekturmittel vorgesehen, um die Wellenform des Frequenzsignals im Bereich der erfassten unzulässigen Änderung anhand einer wahrscheinlichen Wellenform, insbesondere anhand einer sich aufgrund der restlichen Messdaten ergebenden wahrscheinlichen Wellenform zu korrigieren. Ferner sind Mittel vorgesehen, um die Anzahl von Umdrehungen des rotierenden Elements über das korrigierte Frequenzsignal zu bestimmen.

Bevorzugte Ausführungsformen der erfindungsgemäßen Vorrichtung sind in den Unteransprüchen angegeben.

Mit dem erfindungsgemäßen Verfahren bzw. der erfindungsgemäßen Vorrichtung können insbesondere bei Umdrehungszählern auftretende Messfehler zuverlässig erfasst und korrigiert werden. Die Erfindung ist mit besonderem Vorteil insbesondere bei sensorlosen Messsystemen anwendbar, die in der Regel besonders anfällig für Störungen sind. Die betreffenden Fehlererfassungs- und Korrekturmittel können insbesondere durch ein entsprechendes Hardware- und/oder Softwarefilter realisiert werden. Mit dem erfindungsgemäßen Verfahren und der erfindungsgemäßen Vorrichtung werden die Messung vereinfacht und Kosten reduziert. Messfehler werden generell und insbesondere automatisch korrigiert. Zudem kann die Position des rotierenden Elements zwischen zwei erfassten Impulsen berechnet werden.

Die Position des rotierenden Elements kann also allgemein durch Zählen von während der Rotation auftretenden Impulse gemessen werden. Diese Impulse können über einen Sensor oder durch ein sensorloses Messsystem erfasst werden. Dabei können während einer jeweiligen Umdrehung des rotierenden Elements eine oder mehrere Impulse auftreten. Messfehler treten dann auf, wenn Impulse zeitweise zu häufig oder gar nicht auftreten.

Die Erfindung macht sich also die Trägheit des rotierenden Systems zunutze. So kann sich die Frequenz praktisch nicht plötzlich ändern. Die betreffenden Fehler und Abweichungen sind anhand der entsprechenden Frequenzänderungen erkennbar.

Die Wellenform kann durch unterschiedliche Maßnahmen korrigiert werden, wobei vorteilhafterweise angestrebt wird, die Wellenform so gut wie möglich zu rekonstruieren. Dabei kann insbesondere mit Hilfe der Messdaten und insbesondere auch über die Information bezüglich des Startzeitpunkts, des Unterbrechungszeitpunkts und des Stoppzeitpunkts die wahrscheinliche Wellenform wiedergewonnen werden.

Die Messgenauigkeit kann weiter beispielsweise dadurch verbessert werden, dass vorausgesetzt wird, dass zwischen zwei gültigen Messungen das Rechenergebnis eine ganze Zahl sein muss und das Rechenergebnis gegebenenfalls gerundet wird. Diese Maßnahme kann insbesondere dazu beitragen, durch die Integralberechnung auftretende Offsetfehler zu minimieren.

Die Erfindung wird im Folgenden anhand von Ausführungsbeispielen unter Bezugnahme auf die Zeichnung näher erläutert; in dieser zeigen:

Fig. 1    ein Beispiel einer fehlerhaften Frequenzwellenform als Ergebnis einer sensorlosen Messung sowie eine beispielhafte korrigierte Frequenzwellenform,

Fig. 2    ein Beispiel eines Ausgangssignals eines der Erfassung von Stromrippeln in einem Ankerstrom dienenden Rippelzählfilters, wobei auch dem Ankerstrom, das entsprechende Frequenzsignal und im Bereich eines auftretenden Fehlers das korrigierte Frequenzsignal dargestellt sind,

Fig. 3    eine schematische Darstellung einer beispielhaften Ausführungsform eines Hardware-Filters zur Erfassung der im Ankerstrom enthaltenen Stromrippel,

Fig. 4    eine schematische Darstellung einer beispielhaften Ausführungsform eines Software-Filters zur Erfassung der im Ankerstrom enthaltenen Stromrippel,

Fig. 5    eine beispielhafte Darstellung eines Ankerstromverlaufs, der sich nach den Tiefpässen des in der Fig. 4 wiedergegebenen Software-Filters ergebenden Signale sowie des Ausgangssignals des Komparators des in der Fig. 4 wiedergegebenen Software-Filters,

Fig. 6    eine schematische Darstellung einer beispielhaften Ausführungsform einer ein Korrekturfilter umfassenden Anordnung zur Bestimmung der Stromrippelanzahl bzw. Anzahl von Umdrehungen bzw. der Drehstellung des rotierenden Elements,

Fig. 7    eine schematische Darstellung zur Erläuterung einer beispielhaften Bestimmung der Frequenz der Stromrippel,

Fig. 8    eine schematische Darstellung zur Erläuterung einer beispielhaften Bestimmung der Anzahl der Stromrippel aus der Frequenz,

Fig. 9    eine schematische Darstellung zur Erläuterung einer beispielhaften Berechnung der sich zwischen der letzten korrekten Messung und der nächsten korrekten Messung ergebenden Anzahl von Stromrippeln,

Fig. 10   eine schematische Darstellung zur Erläuterung der Bestimmung der wahrscheinlichen Anzahl der Impulse im fehlerhaften Bereich und

Fig. 11      eine schematische Darstellung eines fehlerhaften Frequenzsignals und des korrigierten Frequenzsignals.

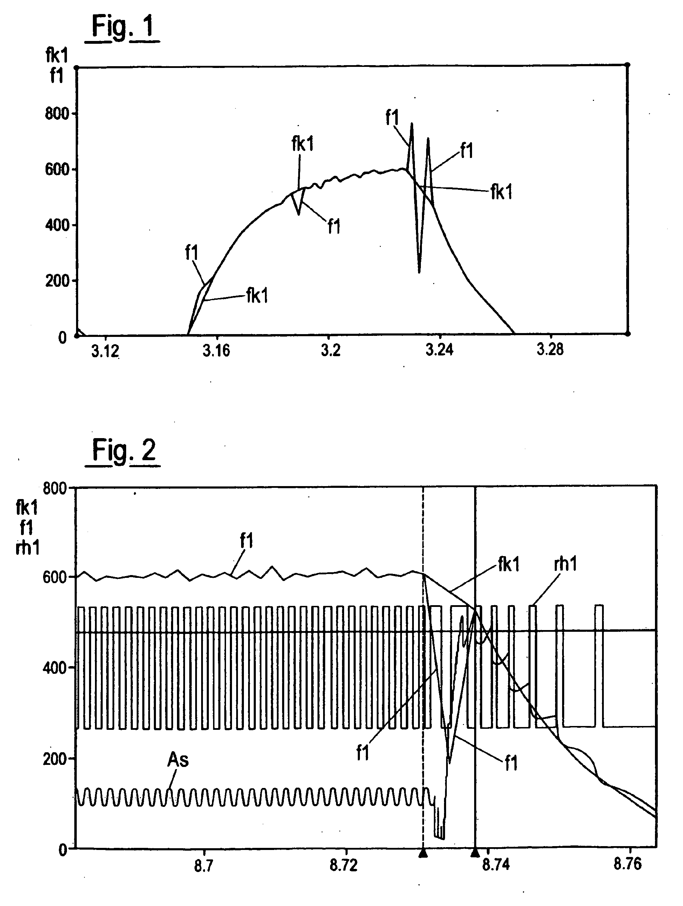

Fig. 1 zeigt ein Beispiel einer fehlerhaften Frequenzwellenform f1 als Ergebnis einer sensorlosen Messung sowie eine beispielhafte korrigierte Frequenzwellenform fk1. Dabei sind die betreffenden Signalamplituden über der Zeit aufgetragen.

Fig. 2 zeigt ein Beispiel eines Ausgangssignals rh1 eines der Erfassung von Stromrippeln in einem Ankerstrom As dienenden Rippelzählfilters.

Dabei sind neben dem Ankerstrom As auch das entsprechende Frequenzsignal oder Frequenzwellenform f1 und im Bereich eines auftretenden Fehlers das korrigierte Frequenzsignal bzw. korrigierte Frequenzwellenform fk1 dargestellt. Dabei sind auch im vorliegenden Fall wieder die Amplituden der verschiedenen Signale über der Zeit dargestellt.

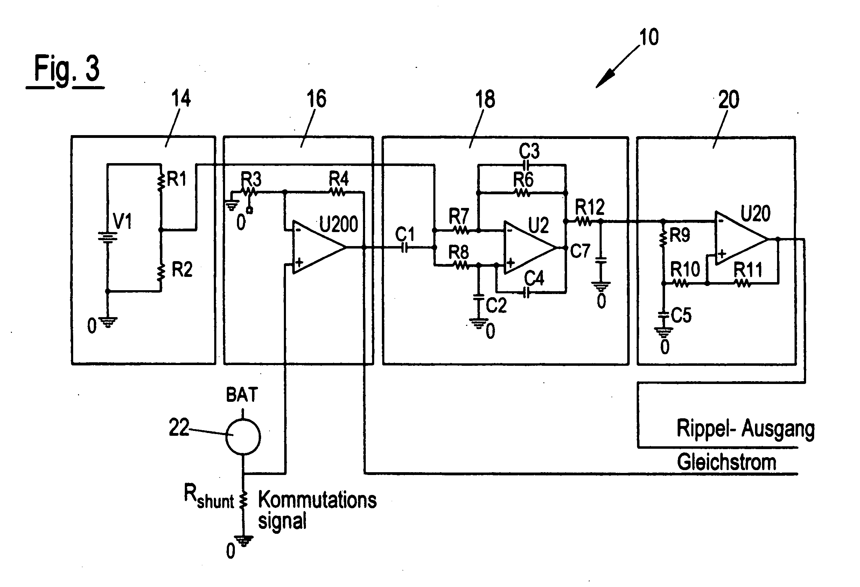

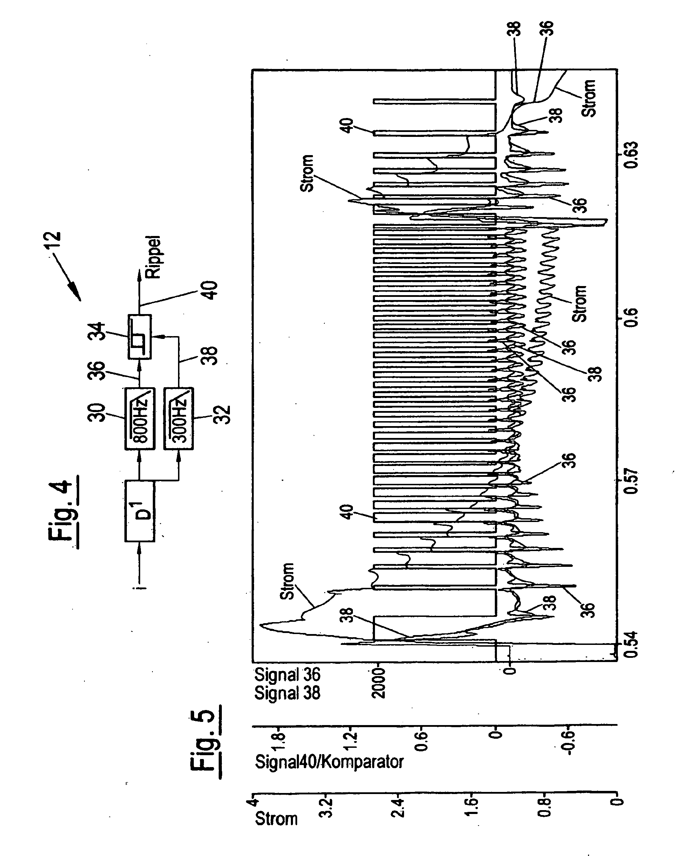

Die betreffende Vorrichtung zur Bestimmung der Drehstellung eines einem Elektromotor, insbesondere einem kommutierten Gleichstrommotor zugeordneten oder von diesem angetriebenen rotierenden Elements umfasst Mittel zur Erfassung der im Ankerstrom des Elektromotors enthaltenen Stromrippel. Dabei können diese Mittel beispielsweise ein Hardware-Filter 10 (vgl. Fig. 3) und/oder ein Software-Filter 12 (vgl. Fig. 4) umfassen. Ein solches Filter dient insbesondere dazu, die Stromrippel aus dem Ankerstrom zu extrahieren.

Das betreffende Rippelzählfilter kann also sowohl in Hardware als auch in Software realisiert sein. Falls das digitale Filter besondere Ansprüche an den Mikroprozessor der betreffenden Steuer- und/oder Auswerteeinheit stellen sollte und er die Kosten dominiert, ist in der Regel eine Hardware-Lösung bevorzugt. Ob eine Hardware- und/oder Software-Lösung implementiert wird, hängt jedoch letztendlich von der Fehlerrate des Filters und davon ab, wie gut die Fehler zu korrigieren sind. Insbesondere die Alterung des Motors kann die Rippelform stark verändern und eine Anpassung des Filters erfordern. Es hat sich jedoch gezeigt, dass ein Hardware-Filter ohne dynamische Korrektureingriffe in der Lage ist, die Stromrippel gut zu erkennen. Falls allerdings ein Filter in einem erschwinglichen Mikroprozessor realisierbar ist, können mit einer entsprechenden Software-Lösung Hardwarekosten eingespart werden.

Fig. 3 zeigt in schematischer Darstellung eine beispielhafte Ausführungsform eines Hardware-Filters 10 zur Erfassung der im Ankerstrom enthaltenen Stromrippel.

Wie anhand der Fig. 3 zu erkennen ist, umfasst das Hardware-Filter 10 Hoch- und Tiefpasskomponenten sowie Differentialfunktionen. Im Einzelnen umfasst dieses Hardware-Filter 10 eine Mittelpunktschaltung 14, einen Verstärker 16, eine ein Filter und einen Wechselstromverstärker umfassende Einheit 18 sowie einen Komparator 20. Die Mittelpunktschaltung 14 umfasst einen zu einer Gleichspannungsquelle V1 parallelen Spannungsteiler aus den Widerständen R1 und R2, dessen Mittelabgriff über Widerstände R7 und R8 mit dem invertierenden bzw. nicht invertierenden Eingang eines Operationsverstärkers U2 der Einheit 18 verbunden ist.

Der Verstärker 16 umfasst einen Operationsverstärker U200, dessen invertierender Eingang über einen Widerstand R3 an Masse gelegt und dessen nicht invertierender Eingang durch ein Kommutationssignal beaufschlagt ist, das an einem Widerstand $R_{shunt}$ abgegriffen wird, der zwischen dem Elektromotor 22 und Masse liegt. Der Ausgang des Operationsverstärkers U200 ist über einen Widerstand R4 mit dem invertierenden Eingang verbunden.

Die ein Filter sowie einen Wechselstromverstärker umfassende Einheit 18 umfasst einen Operationsverstärker U2, dessen invertierender Eingang über einen Widerstand R7 und dessen nicht invertierender Eingang über einen Widerstand R8 mit dem Ausgangssignal der Mittelpunktschaltung 14 verbunden ist. Der Knotenpunkt zwischen den beiden Widerständen R7 und R8 ist über einen Kondensator C1 mit dem Ausgang des dem Verstärker 16 zugeordneten Operationsverstärker U200 verbunden. Der nicht invertierende Eingang des Operationsverstärkers U2 ist zudem über einen Kondensator C2 an Masse angeschlossen. Der Ausgang dieses Operationsverstärkers U2 ist über einen Kondensator C4 mit dem nicht invertierenden Eingang verbunden. Zwischen den Ausgang des Operationsverstärkers U2 und den invertierenden Eingang ist eine Parallelschaltung aus einem Widerstand R6 und einem Kondensator C3 geschaltet. Der Ausgang des Operationsverstärkers U2 ist über einen Widerstand R12 mit dem invertierenden Eingang eines dem Komparator 20 zugeordneten Operationsverstärkers U20 verbunden. Der mit dem invertierenden Eingang des Operationsverstärkers U20 des Komparators 20 verbundene Widerstand R 12 der Einheit 18 ist über einen Kondensator 7 mit Masse verbunden.

Der invertierende Eingang des dem Komparator 20 zugeordneten Operationsverstärkers U20 ist über einen Widerstand R9 und einen Kondensator C5 mit Masse verbunden. Der Knotenpunkt zwischen dem Widerstand R9 und dem Kondensator C5 ist über einen Widerstand R10 mit dem nicht invertierenden Eingang des Operationsverstärkers U20 verbunden. Zwischen den Ausgang des Operationsverstärkers U20 und den nicht invertierenden Eingang ist ein Widerstand R11 geschaltet. Am Ausgang des Operationsverstärkers U20 des Komparators 20 liegt das Rippelausgangssignal an. Am Ausgang des dem Verstärker 16 zugeordneten Operationsverstärkers U200 kann ein Gleichstromsignal abgegriffen werden.

Die Vorrichtung zur Bestimmung der Drehstellung des Elektromotors kann zudem Mittel zur Bestimmung der Anzahl von Umdrehungen des rotierenden Elements in Abhängigkeit von der Anzahl der Stromrippel umfassen. Diese Mittel können insbesondere wieder einen Rippelzähler umfassen.

Zudem kann die Vorrichtung Mittel zur Erfassung von Fehlern bei der Stromrippelerfassung umfassen, durch die fortlaufend die Zeitdauer zwischen jeweils zwei aufeinander folgenden erfassten Stromrippeln gemessen wird, um über deren Kehrwert die Frequenz der erfassten Stromrippel zu bestimmen, wobei die Fehlererfassungsmittel so ausgeführt sind, dass bei einem jeweiligen Auftreten einer einen vorgebbaren Wert überschreitenden unzulässigen Änderung des sich aus dem zeitlichen Frequenzverlauf ergebenden Frequenzsignals auf einen Fehler bei der Stromrippelerfassung geschlossen wird. Zudem können Korrekturmittel vorgesehen sein, um die Wellenform des Frequenzsignals im Bereich der erfassten unzulässigen Änderung insbesondere anhand einer sich aufgrund der restlichen Messdaten ergebenden wahrscheinlichen Wellenform zu korrigieren. Ferner können Mittel vorgesehen sein, um die Anzahl von Umdrehungen des rotierenden Elements über das korrigierte Fehlersignal zu bestimmen.

Dabei können die Korrekturmittel insbesondere einen beispielsweise in einem Mikroprozessor realisierten Korrekturalgorithmus umfassen, der Fehlermessungen korrigiert. Eine solche Korrektur ist zweckmäßig, da insbesondere beim Ein- und Ausschalten des Motors die Rippel aus dem Stromverlauf sehr schwierig zu erkennen und in diesem Bereich Fehler zu erwarten sind. Der Strom ändert sich beispielsweise beim Ein- und Ausschalten sehr schnell. Die Rippelfrequenz und die Frequenzen der Schwungantwort sind einander überlagert. Daher haben herkömmliche Filter Probleme, das Rippelsignal korrekt zu extrahieren.

In der Fig. 4 ist in schematischer Darstellung eine beispielhafte Ausführungsform eines Software-Filters 12 gezeigt.

Dabei bildet die erste Ableitung $D^1$ des Ankerstroms i die Stromrippel deutlich ab. Gleiche Anteile werden auf diese Weise gut herausgefiltert.

Um Störungen auszufiltern, ist beispielsweise ein Tiefpass 30 vierter Ordnung mit einer Eckfrequenz von beispielsweise etwa 800 Hz vorgesehen. Dieser kann nach der Differentiation $D^1$ vorgesehen sein.

Da der hohe Einschaltstrom ebenfalls den Gleichstromanteil der ersten Ableitung anhebt, sollte die Referenz des Komparators mit dem Gleichstromanteil mitlaufen. Dies kann insbesondere wie bei der Hardwareschaltung beispielsweise durch einen zweiten Tiefpass 32 mit einer Eckfrequenz von beispielsweise etwa 300 Hz an der Referenz erreicht werden.

Im Anschluss an die beiden Tiefpässe 30, 32 kann dann beispielsweise wieder ein Komparator 34 vorgesehen sein.

Fig. 5 zeigt eine beispielhafte Darstellung eines Ankerstromverlaufs, der sich nach den Tiefpässen 30, 32 des in der Fig. 4 wiedergegebenen Software-Filters 21 ergebenden Signale 36 bzw. 38 sowie des Ausgangssignals 40 des Komparators 34 des in der Fig. 4 wiedergegebenen Software-Filters 12.

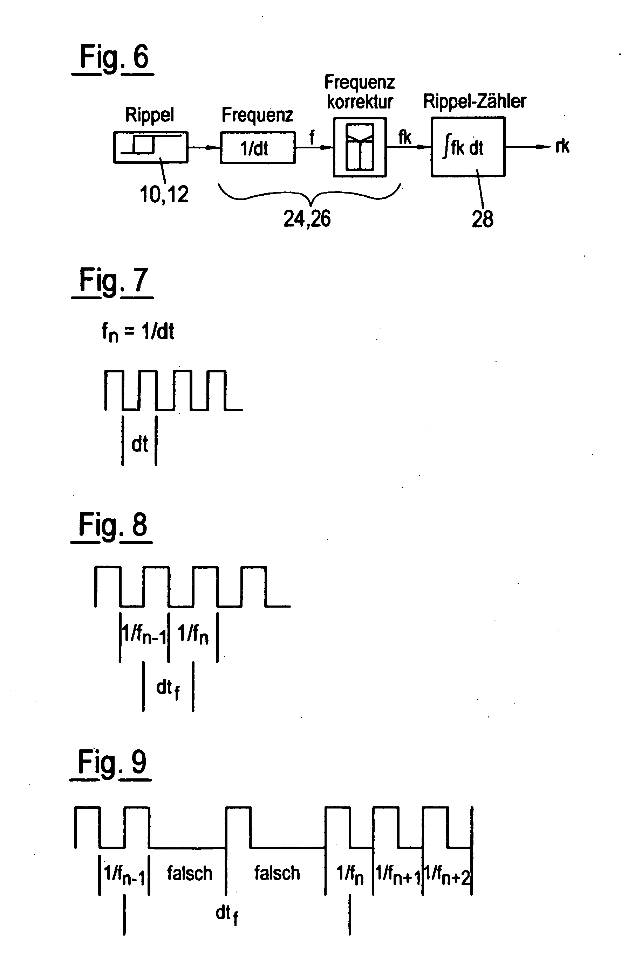

Fig. 6 zeigt in schematischer Darstellung eine beispielhafte Ausführungsform einer ein Korrekturfilter umfassenden Anordnung zur Bestimmung der Stromrippelanzahl bzw. der Anzahl von Umdrehungen bzw. der Drehstellung des rotierenden Elements.

Wie anhand der Fig. 6 zu erkennen ist, sind den Mitteln 10, 12 zur Erfassung der im Ankerstrom des Elektromotors enthaltenen Stromrippel Mittel 24 zur Erfassung von Fehlern bei der Stromrippelerfassung sowie Korrekturmittel 26 nachgeschaltet, um die erfassten Fehler zu korrigieren. Dabei wird zunächst durch den Kehrwert der Zeitdauer dt zwischen den verschiedenen Rippeln die Frequenz f ermittelt und durch eine Frequenzkorrektur das korrigierte Frequenzsignal fk erzeugt.

Dabei wird zur Erfassung von Fehlern bei der Stromrippelerfassung fortlaufend die Zeitdauer zwischen jeweils zwei aufeinander folgenden erfassten Stromrippeln gemessen, um über deren Kehrwert die Frequenz der erfassten Stromrippel zu bestimmen. Dabei sind die Fehlererfassungsmittel so ausgeführt, dass bei einem jeweiligen Auftreten einer einen vorgebbaren Wert überschreitenden unzulässigen Änderung des sich aus dem zeitlichen Verlauf ergebenden Frequenzsignals auf einen Fehler bei der Stromrippelerfassung geschlossen wird. Über die Korrekturmittel 26 wird dann die Wellenform des Frequenzsignals im Bereich der erfassten unzulässigen Änderung insbesondere anhand einer sich aufgrund der restlichen Messdaten ergebenden wahrscheinlichen Wellenform korrigiert. Ferner sind Mittel 28 vorgesehen, um die Anzahl von Umdrehungen des rotierenden Elements über das korrigierte Frequenzsignal fk zu bestimmen, wobei diese Mittel 28 insbesondere einen Rippelzähler zur Bestimmung der Anzahl von Rippeln oder Impulsen durch eine Integration des korrigierten Frequenzsignals fk über die Zeit umfassen können.

Der betreffende Algorithmus kann verlorene Rippel oder doppelte Rippel erkennen und korrigieren.

Dabei kann insbesondere so vorgegangen werden, dass die Frequenz der Stromrippel bestimmt wird, Fehler korrigiert werden und anschließend wieder eine Berechnung der Rippel erfolgt.

Dabei kann die Frequenz der Stromrippel beispielsweise so bestimmt werden, wie sich dies aus der Fig. 7 ergibt. Dabei wird die Frequenz der Rippel aus der Beziehung 1/dt bestimmt, wobei dt die Zeit zwischen den Rippen ist. Es ergibt sich somit die Frequenz $f_n = 1/dt$.

Gemäß Fig. 8 kann aus der Frequenz dann die Anzahl der Rippel beispielsweise über die folgende Beziehung bestimmt werden:

$$dr = f_{n-1} \cdot dt_f + 1/2 \cdot (f_n - f_{n-1}) \cdot dt_f$$

wobei dr die zwischen den zwei errechneten Frequenzen vorhandene Rippelanzahl und $dt_f$ die Zeit zwischen den beiden ermittelten Frequenzen ist.

Liegt kein Fehler in der Messung.vor, so muss dr zwischen zwei errechneten Frequenzen den Wert "1" ergeben. Liegt also dr beispielsweise zwischen einer unteren Grenze von beispielsweise 0,95 und einer oberen Grenze von beispielsweise 1,05, so kann die Messung als korrekt angesehen werden. Der Zählerstand kann daher um einen korrekt erfassten Stromrippel erhöht werden:

$$R = R + 1.$$

Liegt dr nicht innerhalb der vorgebbaren Grenzen, so liegt ein Fehler vor.

Liegt ein Fehler vor, so wird der letzte richtige Messwert $f_{n-1}$ gespeichert. Es wird dann beispielsweise nach drei weiteren Messpunkten in Folge gesucht, für die die Voraussetzungen einer korrekten Messung erfüllt sind. Zweckmäßigerweise sollten jedoch nicht mehr als zehn Messungen verworfen werden.

Zwischen der letzten Messung $f_{n-1}$ und der nächsten richtigen Messung $f_n$ (z.B. die erste richtige von drei aufeinander folgenden Messungen) wird das dR dann beispielsweise wie folgt berechnet (vgl. auch Fig. 9):

$$dr = f_{n-1} \cdot dt_f + 1/2 \cdot (f_n - f_{n-1}) \cdot dt_f,$$

$$R = R + \text{ganze Zahl} (dR) + 2.$$

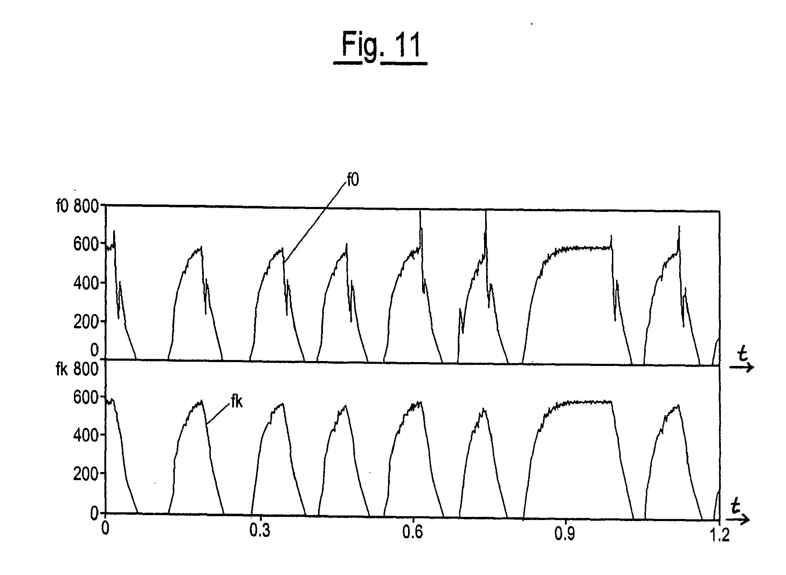

Fig. 11 zeigt in schematischer Darstellung ein beispielhaftes fehlerhaftes Frequenzsignal f0 und ein entsprechend korrigiertes Frequenzsignal fk. Dabei sind jeweils wieder die Amplituden der Frequenzsignale, d.h. die Frequenzen über der Zeit aufgetragen. Für die letzten Messungen vor oder nachdem der Motor steht (Start bzw. Stopp), werden die Rippel zweckmäßigerweise mit Nachkommastellen berechnet.

Auch hier sollten die Nachkommastellen zweckmäßigerweise von Stopp und Start zusammen wieder eine ganze Zahl ergeben. Durch das Runden wird hier die Genauigkeit weiter erhöht. Man kann also das Gesamtergebnis immer dann runden, wenn die Frequenz bzw. der Strom nicht Null sind.

Die Zeit dt zwischen dem Startzeitpunkt und den ersten folgenden Messdaten ist bekannt, da der Startzeitpunkt durch das Einschalten bestimmt wird.

Die Stromrippel können beispielsweise durch den beschriebenen neuen Algorithmus berechnet werden.

Der Endzeitpunkt, zu dem der Motor steht, ist nicht ohne weiteres bekannt, falls der Strom nicht direkt gemessen wird.

Wird der Strom direkt gemessen, dann steht der Motor still, wenn der Strom einen Wert annimmt, der kleiner als ein Mindestwert $I_{min}$ ist. Der betreffende Mindestwert muss ermittelt werden. Andernfalls kann der Zeitpunkt des Stillstands aber auch gut abgeschätzt werden. Für solche Motortypen steht der Motor beispielsweise etwa 20 ms nach dem letzten erkannten Rippel still.

1. Gemäß dem bevorzugten Ausführungsbeispiel der Erfindung wird also die Frequenz zwischen den beispielsweise in Fig. 7 erkennbaren Impulsen berechnet durch die Beziehung

$$f = dr/dt = 1/dt \qquad |dr = 1$$

(siehe Fig. 7),

wobei f = Frequenz, dr = 1 Impuls und dt = Zeitdauer zwischen zwei aufeinander folgenden Impulsen.

2. Aus zwei beispielsweise in der Fig. 8 erkennbaren Frequenzmesspunkten kann umgekehrt die Zahl der Impulse berechnet werden:

$$r = \int f \, dt$$

$$dr = f_{n-1} * dt_f + \tfrac{1}{2} * (f_n - f_{n-1}) * dt_f \qquad | \, dt_f = \tfrac{1}{2} * (dt_{n-1} + dt_n)$$

**(siehe auch Fig. 8),**
wobei $dt_f$ die Zeit zwischen zwei Frequenzen ist:

$$f_{n-1} = 1 / (t_{n-1} - t_{n-2})$$

$$f_n = 1 / (t_n - t_{n-1})$$

$$dt_f = 0{,}5*(t_n + t_{n-1}) - 0{,}5*(t_{n-1} + t_{n-2})$$

3. Die zwei Frequenzwerte sind korrekt, wenn das Ergebnis für dr ~ 1 ergibt.
Zum Beispiel:

$$0.95 < dr < 1.05$$

Die gezählten Impulse werden um eins erhöht bzw. verringert, je nach Drehrichtung, wenn die Bedingung erfüllt ist.

$$r_{Gesamt} = r_{Gesamt} + 1$$

4. Ist die Bedingung nicht erfüllt, liegt ein Fehler vor. Es wird gesamt nicht erhöht bzw. verringert, je nach Drehrichtung, und die folgenden Messdaten werden entsprechend den Schritten 1.-3. solange überprüft, bis mindestens zwei Frequenzpaare in Folge gefunden werden, für die diese Bedingung erfüllt ist. Zweckmäßigerweise sollten nicht mehr als 10 Messdaten hintereinander verworfen werden.

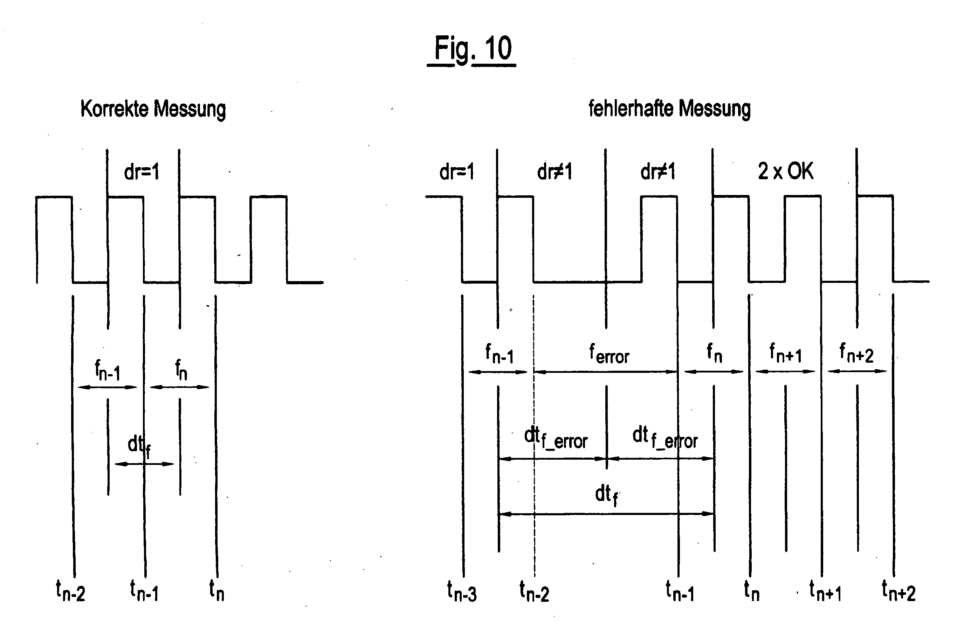

5. Wie sich aus den Fig. 9 und 10 ergibt, kann die wahrscheinliche Zahl der Impulse im fehlerhaften Bereich wiederum bestimmt werden, indem r mit Hilfe der Frequenzen vor und nach dem Auftreten des Fehlers berechnet wird:

$$f_{n-1} = 1 / (t_{n-3} - t_{n-2})$$

$$f_n = 1/(t_n - t_{n-1})$$

$$dt_f = 0{,}5^*(t_n + t_{n-1}) - 0{,}5^*(t_{n-2} + t_{n-3})$$

$$dr = f_{n-1} * dt_f + \tfrac{1}{2} * (f_n - f_{n-1}) * dt_f$$

6. Die Summe der Rippel wird nun um dr + 2 erhöht bzw. verringert, je nach Drehrichtung, wobei dr auf eine Ganze Zahl gerundet werden sollte:

7. Erfolgt ein Ereignis wie Start, Abschalten oder Stoppen, so erfolgt eine Zwischenrechnung. Es wird die Zahl der Impulse berechnet, die zwischen den Zeitpunkten des Ereignisses selbst und der zuvor richtig erkannten Frequenz liegt, sowie zwischen den Zeitpunkten des Ereignisses selbst und der danach folgend richtig erkannten Frequenz. Die Ergebnisse werden jeweils zu der Summe der Impulse mit Nachkommastellen addiert (oder subtrahiert, je nach Drehrichtung) und anschließend auf eine Ganze Zahl gerundet.

8. Zum Start und zum Stoppzeitpunkt ist die Frequenz = 0. Die angenommene Frequenz zum Abschaltzeitpunkt sollte die letzte richtig gemessene Frequenz vor dem Abschalten sein. Der Stoppzeitpunkt ist nach einem der drei folgenden Schritte zu ermitteln:

● Wenn der Motorstrom gemessen wird, ist die Frequenz = 0, wenn der Strom einen zu ermittelnden Mindestwert erreicht hat.
● Der Motor steht nach einer zu ermittelnden Zeit nach dem letzten gemessenen Impuls.
● Die abfallende Gerade des Frequenzverlaufs wird mathematisch bis auf f = 0 verlängert.

Die Erfindung ist mit Vorteil u.a. beispielsweise bei elektromotorischen Antrieben für Kraftfahrzeugsitze, insbesondere Fahrersitze usw. anwendbar. Dabei kommt beispielsweise eine Sitzlängsverstellung, Verstellung der Sitzneigung, eine Sitzhöhenverstellung und/oder eine Verstellung der Kopfstütze infrage.

Dabei treten Fehler insbesondere bei den Start- und Bremsvorgängen auf. Durch das Korrekturfilter können verlorene Rippel herausgerechnet werden, solange vor und hinter dem Fehler mindestens zwei richtige Messwerte vorhanden sind. Um zu vermeiden, dass bei dicht beieinander liegenden Start- und Bremsvorgängen das Filter Rippel verliert, kann über die betreffende Steuereinrichtung bzw. deren Software beispielsweise eine Mindestfahrtzeit gefahren werden, bevor wieder abgeschaltet werden kann.

Es könnten auch Fehler vorkommen, wenn mehrere Störungen hintereinander auftreten und sich gleichzeitig die Motorfrequenz ändert. So kann beispielsweise ein Rippel verloren gehen, wenn vor dem Bremsvorgang bereits interpoliert werden musste. Die Frequenzkurve flacht dann zu schnell ab. Die betreffende Steuerung bzw. der betreffende, in dieser implementierte Algorithmus kann dann zweckmäßigerweise so ausgelegt sein, dass die Frequenz erst nach dem Abschalten abfällt. Es können beispielsweise zwei Messpunkte miteinander verbunden werden, die vor und nach dem Bremsen gemessen wurden. Darin liegt hier der Fehler.

Insbesondere bei einer Sitzlängsverstellung in Form einer so genannten "Blockfahrt" kann die Steuerung bzw. deren Software insbesondere so ausgelegt sein, dass der Motor angehalten wird, bevor er von der Mechanik geblockt wird.

Bezugszeichenliste

10  Hardware-Filter
12  Software-Filter
14  Mittelpunktschaltung
16  Verstärker
18  Einheit

| 20 | Komparator |
|----|-----------|
| 22 | Elektromotor |
| 24 | Fehlererfassungsmittel |
| 26 | Korrekturmittel |
| 28 | Mittel zur Bestimmung der Anzahl von Umdrehungen bzw. Stromrippel |
| 30 | Tiefpass |
| 32 | Tiefpass |
| 34 | Komparator |
| 36 | Signal |
| 38 | Signal |
| 40 | Ausgangssignal des Komparators |

**Patentansprüche**

1. Verfahren zur Bestimmung der Drehstellung eines einem Elektromotor (22) wie insbesondere einem kommutierten Gleichstrommotor zugeordneten oder von diesem angetriebenen rotierenden Elements, bei dem die im Ankerstrom des Elektromotors (22) enthaltenen Stromrippel erfasst werden und die Anzahl von Umdrehungen des rotierenden Elements in Abhängigkeit von der Anzahl der Stromrippel bestimmt wird, wobei zur Erfassung von Fehlern bei der Stromrippelerfassung fortlaufend die Zeitdauer zwischen jeweils zwei aufeinander folgenden erfassten Stromrippeln gemessen und über deren Kehrwert die Frequenz der erfassten Stromrippel bestimmt werden, um **dadurch** einen zeitlichen Frequenzverlauf zu erhalten, bei einem jeweiligen Auftreten einer einen vorgebbaren Wert überschreitenden, d.h. unzulässigen Änderung des sich aus dem zeitlichen Frequenzverlauf ergebenden Frequenzsignals auf einen Fehler bei der Stromrippelerfassung geschlossen wird, die Wellenform des Frequenzsignals im Bereich der erfassten unzulässigen Änderung anhand einer wahrscheinlichen Wellenform, insbesondere anhand einer sich aufgrund der restlichen Messdaten ergebenden wahrscheinlichen Wellenform korrigiert wird und die Anzahl von Umdrehungen des rotierenden Elements über das korrigierte Frequenzsignal bestimmt wird.

2. Verfahren nach Anspruch 1,
wobei die Wellenform des Frequenzsignals aufgrund des bestimmten zeitlichen Frequenzverlaufs der korrekt erfassten Stromrippel und anhand einer sich aufgrund bekannter Stützstellen, des Startzeitpunkts, des Abschaltzeitpunkts und Stoppzeitpunkts des Elektromotors und/oder dergleichen ergebenden wahrscheinlichen Wellenform korrigiert wird.

3. Verfahren nach einem der vorhergehenden Ansprüche,
wobei die Anzahl von Umdrehungen des rotierenden Elements durch eine zeitliche Integration des korrigierten Frequenzsignals bestimmt wird.

4. Verfahren nach einem der vorhergehenden Ansprüche,
wobei die sich zwischen zwei erfassten Stromrippeln ergebende Drehstellung des rotierenden Elements über das korrigierte Frequenzsignal bestimmt wird.

5. Verfahren nach Anspruch 4,
wobei die sich zwischen zwei erfassten Stromrippeln ergebende Drehstellung des rotierenden Elements über eine zeitliche Integration des korrigierten Frequenzsignals bestimmt wird.

6. Verfahren nach einem der vorhergehenden Ansprüche,
wobei die im Ankerstrom des Elektromotors (22) enthaltenen Stromrippel ohne Sensor direkt erfasst werden.

7. Verfahren nach einem der Ansprüche 1 bis 6,
wobei die im Ankerstrom des Elektromotors (22) enthaltenen Stromrippel über wenigstens einen Sensor erfasst werden.

8. Verfahren nach einem der vorhergehenden Ansprüche,
wobei zur Erfassung der unzulässigen Änderung die Anzahl der Impulse über das Integral der Frequenzen berechnet wird.

**EP 2 096 414 B1**

9. Verfahren nach einem der vorhergehenden Ansprüche,
wobei der Wert der sich zwischen zwei korrekten Messungen durch eine Integration des Frequenzsignals ergebenden Anzahl von Stromrippeln gerundet wird.

10. Vorrichtung zur Bestimmung der Drehstellung eines einem Elektromotor wie insbesondere einem kommutierten Gleichstrommotor (22) zugeordneten oder von diesem angetriebenen rotierenden Elements, mit Mitteln (10, 12) zur Erfassung der im Ankerstrom des Elektromotors (22) enthaltenen Stromrippel und mit Mitteln zur Bestimmung der Anzahl von Umdrehungen des rotierenden Elements in Abhängigkeit von der Anzahl der Stromrippel, wobei Mittel (24) zur Erfassung von Fehlern bei der Stromrippelerfassung vorgesehen sind, durch die fortlaufend die Zeitdauer zwischen jeweils zwei aufeinander folgenden erfassten Stromrippeln gemessen wird, um über deren Kehrwert die Frequenz der erfassten Stromrippel zu bestimmen um **dadurch** einen zeitlichen Frequenzverlauf zu erhalten, und die Fehlererfassungsmittel (24) so ausgeführt sind, dass bei einem jeweiligen Auftreten einer einen vorgebbaren Wert überschreitenden, d.h. unzulässigen Änderung des sich aus dem zeitlichen Frequenzverlauf ergebenden Frequenzsignals auf einen Fehler bei der Stromrippelerfassung geschlossen wird, und Korrekturmittel (26) vorgesehen sind, um die Wellenform des Frequenzsignals im Bereich der erfassten unzulässigen Änderung anhand einer wahrscheinlichen Wellenform, insbesondere anhand einer sich aufgrund der restlichen Messdaten ergebenden wahrscheinlichen Wellenform zu korrigieren, und ferner Mittel (28) vorgesehen sind, um die Anzahl von Umdrehungen des rotierenden Elements über das korrigierte Frequenzsignal zu bestimmen.

11. Vorrichtung nach Anspruch 10,
wobei die Korrekturmittel (26) so ausgeführt sind, dass die Wellenform des Frequenzsignals aufgrund des bestimmten zeitlichen Frequenzverlaufs der korrekt erfassten Stromrippel und anhand einer sich aufgrund bekannter Stützstellen des Startzeitpunkts, des Abschaltzeitpunkts und Stoppzeitpunkts des Elektromotors (22) und/oder dergleichen ergebenden wahrscheinlichen Wellenform korrigiert wird.

12. Vorrichtung nach einem der vorhergehenden Ansprüche,
wobei die Mittel (28) zur Bestimmung der Anzahl von Umdrehungen des rotierenden Elements Integrationsmittel umfassen, um die Anzahl von Umdrehungen des rotierenden Elements durch eine zeitliche Integration des korrigierten Frequenzsignals zu bestimmen.

13. Vorrichtung nach einem der vorhergehenden Ansprüche,
wobei Mittel vorgesehen sind, um die sich zwischen zwei erfassten Stromrippeln ergebende Drehstellung des rotierenden Elements über das korrigierte Frequenzsignal zu bestimmen.

14. Vorrichtung nach Anspruch 13,
wobei Integrationsmittel vorgesehen sind, um die sich zwischen zwei erfassten Stromrippeln ergebende Drehstellung des rotierenden Elements über eine zeitliche Integration des korrigierten Frequenzsignals zu bestimmen.

15. Vorrichtung nach einem der vorhergehenden Ansprüche,
wobei die Fehlererfassungsmittel (24) Mittel zur Berechnung der Anzahl der Impulse über das Integral der Frequenzen umfassen.

16. Vorrichtung nach einem der vorhergehenden Ansprüche,
wobei die Mittel (28) zur Bestimmung der Anzahl von Umdrehungen des rotierenden Elements so ausgeführt sind, dass der Wert der sich zwischen zwei korrekten Messungen durch eine Integration des Frequenzsignals ergebenden Anzahl von Stromrippeln gerundet wird.

**Claims**

1. Method for determining the rotational position of a rotating element associated with an electric motor (22), in particular a commutated direct current motor, or actuated by it, wherein the current ripples contained in the armature current of the electric motor (22) are detected and the number of rotations of the rotating element is determined depending on the number of current ripples, wherein

for detecting errors during the current ripple detection, the time period between respective two consecutive detected current ripples is measured continuously and the frequency of the detected current ripples is determined by their reciprocal value to thereby obtain a temporal frequency characteristic, upon a respective occurrence of a change, exceeding a predeterminable value, i.e. an unacceptable change, of the frequency signal resulting from the temporal

11

frequency characteristic, an error at the current ripple detection is concluded, the waveform of the frequency signal is corrected in the range of the detected unacceptable change on the basis of a likely waveform, in particular on the basis of a likely waveform resulting from the remaining measuring data, and the number of rotations of the rotating element is determined based on the corrected frequency signal.

2. Method according to claim 1,
wherein the waveform of the frequency signal is corrected based on the determined temporal frequency characteristic of the correctly detected current ripples and on the basis of a likely waveform resulting from known sampling points, starting time, switching-off time and stopping time of the electric motor and/or the like.

3. Method according to one of the preceding claims,
wherein the number of rotations of the rotating element is determined by a temporal integration of the corrected frequency signal.

4. Method according to one of the preceding claims,
wherein the rotational position of the rotating element, resulting between two detected current ripples, is determined by the corrected frequency signal.

5. Method according to claim 4,
wherein the rotational position of the rotating element, resulting between two detected current ripples, is determined by a temporal integration of the corrected frequency signal.

6. Method according to one of the preceding claims,
wherein the current ripples contained in the armature current of the electric motor (22) are detected directly without sensor.

7. Method according to one of claims 1 to 6,
wherein the current ripples contained in the armature current of the electric motor (22) are detected by at least one sensor.

8. Method according to one of the preceding claims,
wherein for detecting the unacceptable change, the number of pulses is calculated by the integral of the frequencies.

9. Method according to one of the preceding claims,
wherein the value of the number of current ripples resulting from an integration of the frequency signal between two correct measurements is rounded.

10. Apparatus for determining the rotational position of a rotating element associated with an electric motor (22), in particular a commutated direct current motor, or actuated by it, comprising means (10, 12) for detecting current ripples contained in the armature current of the electric motor (22) and means for determining the number of rotations of the rotating element depending on the number of current ripples, wherein means (24) are provided for detecting errors at the current ripple detection by continuously measuring the time period between two respective consecutive detected current ripples to determine the frequency of the detected current ripples by their reciprocal value to thereby obtain a temporal frequency characteristic, and the error detection means (24) are provided such that with a respective occurrence of a change, exceeding a predeterminable value, i.e. an unacceptable change, of the frequency signal resulting from the temporal frequency characteristic, an error at the current ripple detection is concluded, and correction means (26) are provided to correct the waveform of the frequency signal in the range of the detected unacceptable change on the basis of a likely waveform, in particular on the basis of a likely waveform resulting from the remaining measuring data, and further means (28) are provided to determine the number of rotations of the rotating element based on the corrected frequency signal.

11. Apparatus according to claim 10,
wherein the correction means (26) are provided such that the waveform of the frequency signal is corrected based on the determined temporal frequency characteristic of the correctly detected current ripples and on the basis of a likely waveform resulting from known sampling points, starting time, switching-off time and stopping time of the electric motor (22) and/or the like.

12. Apparatus according to one of the preceding claims,

wherein the means (28) for determining the number of rotations of the rotating element including integration means to determine the number of rotations of the rotating element by a temporal integration of the corrected frequency signal.

13. Apparatus according to one of the preceding claims,
wherein means are provided to determine the rotational position of the rotating element, resulting between two detected current ripples, by the corrected frequency signal.

14. Apparatus according to claim 13,
wherein integration means are provided to determine the rotational position of the rotating element, resulting between two detected current ripples, by a temporal integration of the corrected frequency signal.

15. Apparatus according to one of the preceding claims,
wherein the error detection means (24) including means for calculating the number of pulses by the integral of the frequencies.

16. Apparatus according to one of the preceding claims,
wherein the means (28) for determining the number of rotations of the rotational element are provided such that the value of the number of current ripples resulting from an integration of the frequency signal between two correct measurements is rounded.

**Revendications**

1. Procédé pour déterminer la position en rotation d'un élément rotatif associé à un moteur électrique (22), comme en particulier un moteur à courant continu commuté, ou entraîné par celui-ci, dans lequel les ondulations de courant contenues dans le courant d'induit du moteur électrique (22) sont détectées, et le nombre de révolutions de l'élément rotatif est déterminé en fonction du nombre des ondulations de courant, dans lequel
pour détecter des erreurs lors de la détection des ondulations de courant on mesure en permanence la durée temporelle entre deux ondulations de courant détectées qui se suivent mutuellement et on détermine via l'inverse de cette durée la fréquence des ondulations de courant détectées, afin d'obtenir ainsi une évolution temporelle de la fréquence, lors d'une apparition respective d'une modification qui dépasse une valeur prédéterminée, c'est-à-dire d'une modification inadmissible, du signal de fréquence résultant de l'évolution temporelle de la fréquence, on conclut qu'il y a une erreur lors de la détection des ondulations de courant, la forme d'onde du signal de fréquence est corrigée dans la région de la modification inadmissible détectée à l'aide d'une forme d'onde vraisemblable, en particulier à l'aide d'une forme d'onde vraisemblable qui résulte en se basant sur les données de mesure restantes, et le nombre de révolutions de l'élément rotatif est déterminé au moyen du signal de fréquence corrigé.

2. Procédé selon la revendication 1,
dans lequel la forme d'onde du signal de fréquence est corrigée en se basant sur l'évolution temporelle de la fréquence des ondulations de courant correctement détectées et à l'aide d'une forme d'onde vraisemblable qui résulte en se basant sur des points de repère connus, c'est-à-dire l'instant de départ, l'instant de coupure et l'instant d'arrêt du moteur électrique et/ou similaires.

3. Procédé selon l'une des revendications précédentes,
dans lequel le nombre de révolutions de l'élément rotatif est déterminé par une intégration dans le temps du signal de fréquence corrigé.

4. Procédé selon l'une des revendications précédentes,
dans lequel la position en rotation de l'élément rotatif qui se produit entre deux ondulations de courant détectées est déterminée via le signal de fréquence corrigé.

5. Procédé selon la revendication 4,
dans lequel la position en rotation de l'élément rotatif qui se produit entre deux ondulations de courant détectées est déterminée par une intégration temporelle du signal de fréquence corrigé.

6. Procédé selon l'une des revendications précédentes,
dans lequel les ondulations de courant contenues dans le courant d'induit du moteur électrique (22) sont détectées directement sans capteur.

7.  Procédé selon l'une des revendications 1 à 6,
    dans lequel les ondulations de courant contenues dans le courant d'induit du moteur électrique (22) sont détectées via au moins un capteur.

8.  Procédé selon l'une des revendications précédentes,
    dans lequel pour la détection de la modification inadmissible, on calcule le nombre des impulsions via l'intégrale des fréquences.

9.  Procédé selon l'une des revendications précédentes,
    dans lequel la valeur du nombre des ondulations de courant qui se produisent entre deux mesures correctes par intégration du signal de fréquence est arrondie.

10. Dispositif pour déterminer la position en rotation d'un élément rotatif associé à un moteur électrique, comme en particulier un moteur électrique à courant continu commuté (22), ou entraîné par ce dernier, comprenant des moyens (10, 12) pour détecter les ondulations de courant contenues dans le courant d'induit du moteur électrique (22), et des moyens pour déterminer le nombre de révolutions de l'élément rotatif en fonction du nombre des ondulations de courant,
    dans lequel sont prévus des moyens (24) pour détecter des erreurs lors de la détection des ondulations de courant, par lesquels la durée temporelle entre deux ondulations de courant détectées mutuellement successives est mesurée en permanence, afin de déterminer via l'inverse de cette durée la fréquence des ondulations de courant détectées et obtenir ainsi une évolution temporelle de la fréquence, et les moyens de détection d'erreurs (24) sont ainsi réalisés que lors d'une apparition respective d'une modification qui dépasse une valeur prédéterminée, c'est-à-dire d'une modification inadmissible du signal de fréquence qui résulte de l'évolution temporelle de la fréquence, ils concluent à une erreur lors de la détection des ondulations de courant, et il est prévu des moyens de correction (26) pour corriger la forme d'onde du signal de fréquence dans la région de la modification inadmissible détectée à l'aide d'une forme d'onde vraisemblable, en particulier à l'aide d'une forme d'onde vraisemblable qui résulte en se basant sur les données de mesure restantes, et il est encore prévu des moyens (28) pour déterminer le nombre de révolutions de l'élément rotatif via le signal de fréquence corrigé.

11. Dispositif selon la revendication 10,
    dans lequel les moyens de correction (26) sont ainsi réalisés que la forme d'onde du signal de fréquence est corrigée en se basant sur l'évolution temporelle de la fréquence des ondulations de courant correctement détectées et à l'aide d'une forme d'onde vraisemblable qui résulte en se basant sur des points de repères connus, c'est-à-dire l'instant de départ, l'instant de coupure, et l'instant d'arrêt du moteur électrique (22) et/ou similaires.

12. Dispositif selon l'une des revendications précédentes,
    dans lequel les moyens (28) pour déterminer le nombre de révolutions de l'élément rotatif comprennent des moyens d'intégration afin de déterminer le nombre de révolutions de l'élément rotatif par une intégration temporelle du signal de fréquence corrigé.

13. Dispositif selon l'une des revendications précédentes,
    dans lequel sont prévus des moyens afin de déterminer la position en rotation de l'élément rotatif, qui se produit entre deux ondulations de courant détectées, via le signal de fréquence corrigé.

14. Dispositif selon la revendication 13,
    dans lequel sont prévus des moyens d'intégration afin de déterminer la position en rotation de l'élément rotatif, qui se produit entre deux ondulations de courant détectées, via une intégration temporelle du signal de fréquence corrigé.

15. Dispositif selon l'une des revendications précédentes,
    dans lequel les moyens de détection d'erreurs (24) comprennent des moyens pour calculer le nombre des impulsions via l'intégrale des fréquences.

16. Dispositif selon l'une des revendications précédentes,
    dans lequel les moyens (28) pour déterminer le nombre de révolutions de l'élément rotatif sont ainsi réalisés que la valeur du nombre des ondulations de courant qui résultent entre deux mesures correctes par une intégration du signal de fréquence est arrondie.

## Fig. 1

## Fig. 2

## Fig. 3

Rippel- Ausgang

Gleichstrom

Kommutations signal

$R_{shunt}$

BAT

Fig. 4

Fig. 5

EP 2 096 414 B1

## Fig. 6

Rippel — Frequenz 1/dt — f — Frequenz korrektur — fk — Rippel-Zähler $\int fk\,dt$ — rk

10,12    24,26    28

## Fig. 7

$f_n = 1/dt$

dt

## Fig. 8

$1/f_{n-1}$    $1/f_n$

$dt_f$

## Fig. 9

$1/f_{n-1}$    falsch    falsch    $1/f_n$    $1/f_{n+1}$    $1/f_{n+2}$

$dt_f$

# Fig. 10

Korrekte Messung

fehlerhafte Messung

$f_{n-1}$  $f_n$

$dt_f$

$t_{n-2}$  $t_{n-1}$  $t_n$

dr=1

dr=1  dr≠1  dr≠1  2 x OK

$f_{n-1}$  $f_{error}$  $f_n$  $f_{n+1}$  $f_{n+2}$

$dt_{f\_error}$  $dt_{f\_error}$

$dt_f$

$t_{n-3}$  $t_{n-2}$  $t_{n-1}$  $t_n$  $t_{n+1}$  $t_{n+2}$

EP 2 096 414 B1

Fig. 11

**EP 2 096 414 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02095924 A1
- DE 19729238 C1
- DE 102005023880 A1
- DE 10028035 A1